# EUROPEAN PATENT SPECIFICATION

(11) **EP 0 451 876 B1**
(45) Date of publication and mention of the grant of the patent: **29.11.1995**
(21) Application number: 91107875.6
(22) Date of filing: 17.06.1987
(51) Int. Cl.: C08F 10/00, C08F 4/654

(54) **Olefin polymerization catalyst**
Olefinpolymerisationskatalysator
Catalyseur de polymérisation d'oléfines

(30) Priority: 17.06.1986 US 875180; 28.05.1987 US 55430
(43) Date of publication of application: 16.10.1991
(62) Divisional of application: 87305377.1
(73) Proprietor: AMOCO CORPORATION, Chicago Illinois 60601 (US)
(72) Inventor: Arzoumanidis, Gregory Gerasimos, Naperville, Illinois 60540 (US); Johnson, Bryce Vincent, Mound, Minnesota 55364 (US); Karayannis, Nicholas Marios, Naperville, Illinois 60540 (US); Khelghatian, Habet M., Naperville, Illinois 60565 (US); Lee, Sam Soksoon, Hoffman Estates, Illinois 60195 (US)
(74) Representative: Ritter, Stephen David

(56) References cited:
- EP-A- 0 171 179
- FR-A- 2 392 037
- US-A- 4 540 679

## Description

### Background of the Invention

This invention relates to catalyst systems useful for polymerizing alpha-olefins and particularly relates to a supported titanium halide catalyst component and a catalyst system containing such component.

A suitable catalyst should produce a polymer with minimum particles having average diameter less than 150 »m (fines) or greater than 850 »m. Another property which is important commercially is maintenance of an acceptably high bulk density. Typically, this property is measured in pounds per cubic foot of polymer. One approach to improve morphology control as described in U.S. Patent 4,540,679 is to solubilize a magnesium species with carbon dioxide in an alcohol solvent. Although Example VI of this patent describes a high activity catalyst, its morphology needs improvement in that the catalyst produced too many fines.

The present invention incorporates a series of catalyst formation process steps which produce a catalyst with exceptionally high activity and stereospecificity combined with very good morphology.

Supported, magnesium-containing, titanium-containing, electron donor-containing olefin polymerization catalysts now are well known in the art. Use of carbon dioxide in preparing a magnesium-containing support has been described in the aforementioned U.S. Patent 4,540,679. Also, in a different context use of carbon dioxide was described in U.S. Patents 4,246,383; 2,244,838; 4,529,715; and 4,530,915. Treating alcoholic solutions and suspensions of alkaline earth alcoholates with carbon dioxide and sulfur dioxide was noted in Chemical Abstracts, Vol. 76, 853050v (1972). Forming a soluble magnesium species has been described in U.S. Patents 4,315,874; 4,399,054; 4,071,674; and 4,439,540. Examples of use of silicon compounds information of a catalyst component include U.S. Patents 4,071,672; 4,085,276; 4,220,554; and 4,315,835. Tetrahydrofuran (THF) has been described variously to complex a magnesium chloride species (e.g., U.S. Patents 4,482,687, 4,277,372, 3,642,746, and 3,642,772 and in European Patent 131,832); as a modifier in a cocatalyst (e.g., U.S. Patents 4,158,642 and 4,148,756); and as a solvent (e.g., U.S. Patents 4,477,639 and 4,518,706). However the specific combination of steps taught in this invention to produce a catalyst with extremely advantageous properties have not been disclosed.

According to the present invention, there is provided a solid, hydrocarbon-insoluble alpha-olefin polymerization catalyst component which comprises a product formed by:
A. Forming a solution of a magnesium-containing species from
   (i) a magnesium carbonate or a magnesium carboxylate, or
   (ii) from a magnesium-containing species formed from a magnesium alkoxide and sulfur dioxide;
B. Precipitating solid particles from such magnesium-containing solution by treatment with a transition metal halide in the absence of an organosilane;
C. Reprecipitating such solid particles from a mixture containing a cyclic ether, cyclohexene oxide, cyclohexanone, ethyl acetate or phenyl acetate ; and
D. Treating the reprecipitated particles with a transition metal compound and an electron donor.

The invention described herein is based on a solubilized magnesium species such as described in U.S. Patent 4,540,679. It has been found that first forming a solid precipitate from such solubilized magnesium species with a titanium halide in the presence of an organosilane of the type RₙSiR'₄₋ₙ, wherein n = 0 to 4, R = hydrogen, alkyl, alkoxy, chloroalkyl or aryl and R' = OR or Cl, produces a precipitate with a uniform particle size.

According to the invention, it has been found that the catalyst component may be improved by reprecipitating the solid precipitate formed as described above from a solution containing a cyclic ether such as tetrahydrofuran (THF). The reprecipitated solid particles form a catalyst with very high activity and stereospecificity together with high bulk density. Typical bulk densities were increased from 25 lbs/ft³ (401 kg/m³) to 28-30 lbs/ft³ (450-482 kg/m³). To form a suitable catalyst component, the reprecipitated solid described above is treated with a Ti(IV) species in the presence of an electron donor. It has been found that the best catalyst is formed by a two-stage treatment in which the reprecipitated solid first is treated with a Ti(IV) species, then the resulting solid is retreated with a mixture of Ti species and an electron donor.

Catalyst components of this invention may be prepared by precipitating a first solid material from a hydrocarbon medium by treating a magnesium carbonate or carboxylate composition with a transition metal compound in the absence of an organosilane. The first precipitated solid is reprecipitated from a medium containing a cyclic ether such as tetrahydrofuran (THF) to form uniform solid particles. The resulting particles are retreated with a suitable Ti(IV) compound and a suitable electron donor to form an olefin polymerization catalyst component. Preferably, the reprecipitated solid particles are first treated with a Ti(IV) compound in a diluent and then retreated with a Ti(IV) compound and an electron donor. Such component may be combined with a suitable aluminum alkyl compound together with suitable modifier compounds to form a catalyst system useful to polymerize olefins, especially propylene. Using the catalyst of this invention, polymer particles with a narrow particle size distribution in high yield and stereospecificity may be obtained.

Soluble magnesium carbonates and carboxylates useful in this invention include those described in U.S. Patent 4,540,679 and U.S. Application S.N. 741,858, filed June 6, 1985, (now US Patent No. 4612299), Typically, magnesium carbonate and carboxylate solutions are formed in a suitable diluent by treating a magnesium compound with carbon dioxide, preferably in the presence of a suitable solvating agent such as an alcohol. For example, magnesium hydrocarbyl carbonate solutions can be formed by suspending magnesium alkoxide, such as magnesium ethoxide, in an alcohol medium and adding carbon dioxide until the magnesium ethoxide dissolves to form magnesium ethyl carbonate. Also, magnesium alkoxide solution with an alcohol can be used.

Specific examples of magnesium alcoholates which are useful according to this invention include Mg(OCH₃)₂, Mg(OC₂H₅)₂, Mg(OC₄H₉)₂, Mg(OC₆H₅)₂, Mg(OC₆H₁₃)₂, Mg(OC₉H₁₉)₂, Mg(OC₁₀H₇)₂, Mg(OC₁₂H₉)₂, Mg(OC₁₂H₂₅)₂, Mg(OC₁₆H₃₃)₂, Mg(OC₂₀H₄₁)₂, Mg(OCH₃)(OC₂H₅), Mg(OCH₃)(OC₆H₁₃), Mg(OC₂H₅)(OC₈H₁₇), Mg(OC₆H₁₃)(OC₂₀H₄₁), Mg(OC₃H₇)(OC₁₀H₇), Mg(OC₂H₄Cl)₂ and Mg(OC₁₆H₃₃)(OC₁₈H₃₇). Mixtures of magnesium alcoholates also can be employed if desired. In addition, mixtures of magnesium alcoholates with other alkali earth metal alkoxides, alkali metal alkoxides, minor amounts of other suitable metal salts such as alcoholates of lanthanum and the lanthanide metals, magnesium halides, hydroxyhalides, carboxylates, and so forth, can be used. Magnesium hydrocarbyl alcoholates are functional equivalents of the magnesium alcoholates when alcohol is used as the suspending medium for the reaction with carbon dioxide since the magnesium hydrocarbyl alcoholates are converted to Mg(OR)(OR') in alcohol. Corresponding Mn(II) and Fe(II) compounds, such as Mn(OCH₃)₂ and Fe(OCH₃)₂, are considered equivalent to Mg(II) compounds.

In inert suspending medium the magnesium hydrocarbyl alcoholates are converted into magnesium hydrocarbyl carbonate salts on the addition of carbon dioxide. Spherical forms of magnesium alkoxides can be used, if desired, particularly when an alcoholic medium is not employed for the carbonation step. Reaction of a magnesium alcoholates compound with carbon dioxide can be represented as follows: 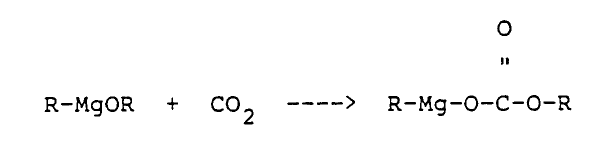
where R is a hydrocarbyl group of 1 to 20 carbon atoms.

Alternatively, a solution of a hydrocarbyl magnesium compound with carbon dioxide may be used in this invention. Reaction of hydrocarbyl magnesium compound with carbon dioxide to form a magnesium carboxylate can be represented as follows: 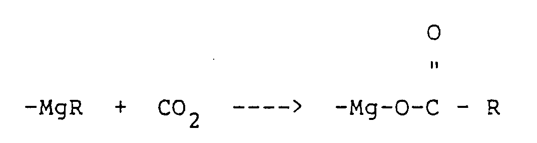
where R is a hydrocarbyl group of 1 to 20 carbon atoms. It has been found that sulfur dioxide can be substituted for carbon dioxide in forming magnesium hydrocarbyl sulfites. The latter can be substituted for magnesium hydrocarbyl carbonates. Hydrocarbyl magnesium compounds useful in this invention have the structure R-Mg-Q wherein Q is hydrogen, halogen or R' (each R' is independently a hydrocarbyl group of 1 to 20 carbon atoms.) Specific examples of hydrocarbyl magnesium compounds useful in this invention include:
Mg(CH₃)₂, Mg(C₂H₅)₂, Mg(C₄H₉)₂, Mg(C₆H₅)₂, Mg(C₆H₁₃)₂, Mg(C₉H₁₉)₂, Mg(C₁₀H₇)₂, Mg(C₁₂H₉)₂, Mg(C₁₂H₂₅)₂, Mg(C₁₆H₃₃)₂, Mg(C₂₀H₄₁)₂, Mg(CH₃)(C₂H₅), Mg(CH₃)(C₆H₁₃), Mg(C₂H₅)(C₈H₁₇), Mg(C₆H₁₃)(C₂₀H₄₁), Mg(C₃H₇)(C₁₀H₇), Mg(C₂H₄Cl)₂ and Mg(C₁₆H₃₃)(C₁₈H₃₇), Mg(C₂H₅)(H), Mg(C₂H₅)(Cl) and Mg(C₂H₅)(Br). Mixtures of hydrocarbyl magnesium compounds also can be employed if desired.

Dihydrocarbyl magnesium compounds preferred for use in this invention are those of the formula Mg(R')₂ wherein R' is as defined above. In terms of catalytic activity and stereospecificity, best results are achieved through the use of hydrocarbyl magnesium halide compounds of the formula Mg(R')Q' wherein R' is an alkyl radical of 1 to 18 carbon atoms, an aryl radical of 6 to 12 carbon atoms or an alkaryl or aralkyl radical of 7 to 12 carbon atoms and Q' is chloride or bromide.

Alcohols useful in solvating magnesium carbonate and carboxylates include those having the structure HOR' wherein R' is an alkyl radical of 1 to 18 carbon atoms, an aryl radical of 6 to 12 carbon atoms or an alkaryl or aralkyl radical of 7 to 12 carbon atoms. Typically, one or more alcohols containing from 1 to 12 carbon atoms can be used such as methanol, ethanol, propanol, isopropanol, tert-butyl alcohol, cyclohexanol, 2-ethylhexanol and dodecanol. Of these, 2-ethyl-1-hexanol is preferred.

According to one aspect of this invention, a magnesium carbonate or carboxylate solution is treated with a transition metal halide, preferably a titanium(IV) halide to precipitate a first solid component. Titanium tetrachloride is most preferred.

In preparation of the stereospecific supported catalyst components of this invention, typically, the soluble magnesium-containing species and titanium(IV) halide component are contacted in amounts such that the atomic ratio of magnesium to titanium is at least 0.3:1 and preferably, is from 0.4:1 to 20:1 and more preferably, from 0.5:1 to 3:1.

In another aspect of this invention, the first precipitated solid is reprecipitated from a solution containing a cyclic ether. In a typical reprecipitation procedure, the first solid is entirely solubilized in the cyclic ether solvent and then solid is allowed to reprecipitate to form particles of uniform size. The preferable ether is tetrahydrofuran, although other suitable cyclic ethers, such as tetrahydropyran and 2-methyltetrahydrofuran, may be used, which can solubilize the first solid material. Also, thioethers such as tetrahydrothiophene can be used. In some instances, such as the use of 2,2,5,5-tetrahydrofuran and tetrahydropyran-2-methanol, reprecipitation occurs upon heating to 130-185°F. (54-85°C) Other compounds may be used which act in an equivalent manner, i.e., materials which can solubilize the first solid and from which solid uniform particles can be reprecipitated, such as cyclohexene oxide, cyclohexanone, ethyl acetate and phenyl acetate. Mixtures of suitable materials may be used.

In another aspect of this invention, the reprecipitated solid is treated with a titanium(IV) compound in the presence of a suitable electron donor. The preferable procedure is a two-step method by which the reprecipitated solid is treated first with a Ti(IV) component and then with the Ti(IV) component combined with a suitable electron donor. Although, typically, solid is separated from the first Ti(IV)-containing solution before a second treatment with Ti(IV) component and electron donor, an alternative procedure can be to react the reprecipitated solid with Ti(IV) compound and then add the electron donor.

Organic electron donors useful in preparation of stereospecific supported catalyst components many times can be organic compounds containing one or more atoms of oxygen, nitrogen, sulfur, and phosphorus. Such compounds include organic acids, organic acid esters, alcohols, ethers, aldehydes, ketones, amines, amine oxides, amides, thiols and various phosphorous acid esters and amides. Mixtures of organic electron donors can be used if desired. Specific examples of useful oxygen-containing electron donor compounds include organic acids and esters. Useful organic acids contain from 1 to 20 carbon atoms and 1 to 4 carboxyl groups.

The preferred electron donor compounds include esters of aromatic acids. Preferred organic electron donors according to this invention are C₁-C₆ alkyl esters of aromatic mono- and dicarboxylic acids and halogen-, hydroxyl-, oxo-, alkyl-, alkoxy-, aryl-, and aryloxy-substituted aromatic mono- and dicarboxylic acids. Among these, the alkyl esters of benzoic and halobenzoic acids wherein the alkyl group contains 1 to about 6 carbon atoms, such as methyl benzoate, methyl bromobenzoate, ethyl benzoate, ethyl chlorobenzoate, ethyl bromobenzoate, butyl benzoate, isobutyl benzoate, hexyl benzoate, and cyclohexyl benzoate, are preferred. Other preferable esters include ethyl p-anisate and methyl-p-toluate. An especially preferred aromatic ester is a dialkylphthalate ester in which the alkyl group contains from two to ten carbon atoms. Examples of preferred phthalate ester are diisobutylphthalate, diethylphthalate, ethylbuytlphthalate, and di-n-butylphthalate.

Titanium(IV) compounds useful in treating the reprecipitated solid particles of this invention are titanium halides and haloalcoholates having 1 to 20 carbon atoms per alcoholate group. Mixtures of titanium compounds can be employed if desired. Preferred titanium compounds are the halides and haloalcoholates having 1 to 8 carbon atoms per alcoholate group. Examples of such compounds include TiCl₄, TiBr₄, Ti(OCH₃)Cl₃, Ti(OC₂H₅)Cl₃, Ti(OC₄H₉)Cl₃, Ti(OC₆H₅)Cl₃, Ti(OC₆H₁₃)Br₃, Ti(OC₈H₁₇)Cl₃, Ti(OCH₃)₂Br₂, Ti(OC₂H₅)₂Cl₂, Ti(OC₆H₁₃)₂Cl₂, Ti(OC₈H₁₇)₂Br₂, Ti(OCH₃)₃Br, Ti(OC₂H₅)₃Cl, Ti(OC₄H₉)₃Cl, Ti(OC₆H₁₃)₃Br, and Ti(OC₈H₁₇)₃Cl. Titanium tetrahalides, particularly titanium tetrachloride (TiCl₄), are most preferred.

The electron donor component used in preparation of the solid catalyst component is preferably used in an amount ranging from 0.001 to 1.0 mole per gram atom of titanium, and preferably from 0.005 to 0.8 mole per gram atom. Best results are achieved when this ratio ranges from 0.01 to 0.6 mole per gram atom of titanium.

Typical suitable diluents useful in this invention are aromatic or substituted aromatic liquids, although other hydrocarbon-based liquids may be used. Aromatic hydrocarbons, such as toluene, and substituted aromatics, such as chlorobenzene, have been found suitable. Another suitable diluent is a halogenated aromatic such as chlorobenzene or a mixture of a halogenated aromatic such as chlorobenzene and a halogenated aliphatic such as dichloroethane. Also useful are higher boiling aliphatic liquids such as kerosine. Mixtures of diluents may be used. One useful diluent component is Isopar G which is a C₁₀-average isoparaffinic hydrocarbon boiling at 156-176°C. A suitable diluent should boil at a high enough temperature to promote reaction and not adversely affect resulting catalyst performance.

Other examples of useful diluents include alkanes such as hexane, cyclohexane, ethylcyclohexane, heptane, octane, nonane, decane and undecane; haloalkanes such as 1,2-dichloroethane, 1,1,2-trichloroethane and carbon tetrachloride; aromatics such as benzene, toluene, xylenes and ethylbenzene; and halogenated and hydrogenated aromatics such as chlorobenzene and o-dichlorobenzene.

Due to the sensitivity of catalyst components to catalyst poisons such as water, oxygen, and carbon oxides, the catalyst components would normally be prepared in the substantial absence of such materials. Catalyst poisons can be excluded by carrying out the preparation under an atmosphere of an inert gas such as nitrogen or argon, or an atmosphere of alpha-olefin. As noted above, purification of any diluent to be employed also aids in removing poisons from the preparative system.

As a result of the above-described preparation there is obtained a solid reaction product suitable for use as a catalyst component. Prior to such use, it is desirable to remove incompletely-reacted starting materials from the solid reaction product. This is conveniently accomplished by washing the solid, after separation from any preparative diluent, with a suitable solvent, such as a liquid hydrocarbon or chlorocarbon, preferably within a short time after completion of the preparative reaction because prolonged contact between the catalyst component and unreacted starting materials may adversely affect catalyst component performance.

Although not required, the solid reaction product prepared as described herein may be contacted with at least one liquid Lewis acid prior to polymerization. Such Lewis acids useful according to this invention are materials which are liquid at treatment temperatures and have a Lewis acidity high enough to remove impurities such as unreacted starting materials and poorly affixed compounds from the surface of the above-described solid reaction product. Preferred Lewis acids include halides of Group III-V metals which are in the liquid state at temperatures up to 170°C. Specific examples of such materials include BCl₃, AlBr₃, TiCl₄, TiBr₄, SiCl₄, GeCl₄, SnCl₄, PCl₃ and SbCl₅. Preferable Lewis acids are TiCl₄ and SiCl₄. Mixtures of Lewis acids can be employed if desired. Such Lewis acid may be used in a compatible diluent.

Although not required, the above-described solid reaction product may be washed with an inert liquid hydrocarbon or halogenated hydrocarbon before contact with a Lewis acid. If such a wash is conducted it is preferred to substantially remove the inert liquid prior to contacting the washed solid with Lewis acid.

Although the chemical structure of the catalyst components described herein is not presently known, the components preferably contain from 1 to 6 wt.% titanium, from 10 to 25 wt.% magnesium, and from 45 to 65 wt.% halogen. Preferred catalyst components made according to this invention contain from 1.0 to 3 wt.% titanium, from 15 to 21 wt.% magnesium and from 55 to 65 wt.% chlorine.

One unusual aspect of the titanium-containing component particles prepared according to the preferred method of this invention is that the particles have a cubic shape.

The titanium-containing catalyst component of this invention may be prepolymerized with an alpha-olefin before use as a polymerization catalyst component. In prepolymerization, catalyst and an organoaluminum compound cocatalyst such as triethylaluminum are contacted with an alpha-olefin such as propylene under polymerization conditions, preferably in the presence of a modifier such as a silane and in an inert hydrocarbon such as hexane. Typically, the polymer/catalyst weight ratio of the resulting prepolymerized component is 0.1:1 to 20:1. Prepolymerization forms a coat of polymer around catalyst particles which in many instances improves particle morphology, activity, stereospecificity, and attrition resistance. A particularly useful prepolymerization procedure is described in U.S. Patent 4,579,836.

The titanium-containing catalyst component of this invention is used in a polymerization catalyst containing a cocatalyst component including a Group II or III metal alkyl and, typically, one or more modifier compounds.

Useful Group II and IIIA metal alkyls are compounds of the formula MRₘ wherein M is a Group II or IIIA metal, each R is independently an alkyl radical of 1 to 20 carbon atoms, and m corresponds to the valence of M. Examples of useful metals, M, include magnesium, calcium, zinc, cadmium, aluminum, and gallium. Examples of suitable alkyl radicals, R, include methyl, ethyl, butyl, hexyl, decyl, tetradecyl, and eicosyl.

From the standpoint of catalyst component performance, preferred Group II and IIIA metal alkyls are those of magnesium, zinc, and aluminum wherein the alkyl radicals contain 1 to 12 carbon atoms. Specific examples of such compounds include Mg(CH₃)₂, Mg(C₂H₅)₂, Mg(C₂H₅)(C₄H₉), Mg(C₄H₉)₂, Mg(C₆H₁₃)₂, Mg(C₁₂H₂₅)₂, Zn(CH₃)₂, Zn(C₂H₅)₂, Zn(C₄H₉)₂, Zn(C₄H₉)(C₈H₁₇), Zn(C₆H₁₃)₂, Zn(C₁₂H₂₅)₂, Al(CH₃)₃, Al(C₂H₅)₃, Al(C₃H₇)₃, Al(C₄H₉)₃, Al(C₆H₁₃)₃, and Al(C₁₂H₂₅)₃. More preferably a magnesium, zinc, or aluminum alkyl containing 1 to 6 carbon atoms per alkyl radical is used. Best results are achieved through the use of trialkylaluminums containing 1 to 6 carbon atoms per alkyl radical, and particularly triethylaluminum and triisobutylaluminum or a combination thereof.

If desired, metal alkyls having one or more halogen or hydride groups can be employed, such as ethylaluminum dichloride, diethylaluminum chloride, ethylaluminum sesquichloride and, diisobutylaluminum hydride.

A typical catalyst composition is formed by combining the supported titanium-containing compound described in this invention and an alkyl aluminum compound together with modifiers including an electron donor and, preferably, a silane. Typically, useful aluminum-to-titanium atomic ratios in such catalyst formulations are 10 to 500 and preferably 30 to 300. Typical aluminum compound-to-electron donor molar ratios are 5 to 40. Typical aluminum-to-silane compound molar ratios are 8 to 30.

To maximize catalyst activity and stereospecificity, it is preferred to incorporate one or more modifiers, typically electron donors, and including compounds such as silanes, mineral acids, organometallic chalcogenide derivatives of hydrogen sulfide, organic acids, organic acid esters and mixtures thereof.

Organic electron donors useful as cocatalyst modifiers useful in this invention are organic compounds containing oxygen, silicon, nitrogen, sulfur, and/or phosphorus. Such compounds include organic acids, organic acid anhydrides, organic acid esters, alcohols, ethers, aldehydes, ketones, silanes, amines, amine oxides, amides, thiols, various phosphorus acid esters and amides. Mixtures of organic electron donors can be employed if desired.

Preferred organic acids and esters are benzoic acid, halobenzoic acids, phthalic acid, isophthalic acid, terephthalic acid, and the alkyl esters thereof wherein the alkyl group contains 1 to 6 carbon atoms such as methyl benzoate, methyl bromobenzoates, ethyl benzoate, ethyl chlorobenzoates, butyl benzoate, isobutyl benzoate,, methyl anisate, ethyl anisate, methyl p-toluate, hexyl benzoate, and cyclohexyl benzoate, and diisobutyl phthalate as these give good results in terms of activity and stereospecificity and are convenient to use.

The polymerization cocatalyst useful in this invention advantageously contains an aliphatic or aromatic silane modifier. Preferable silanes useful in cocatalysts in this invention include alkyl-, aryl-, and/or alkoxy-substituted silanes containing hydrocarbon moieties with one to 20 carbon atoms. Especially preferred are silanes having a formula: SiR₄, wherein R is independently R' or OR' with R' having 1 to 20 carbon atoms. Preferred aromatic silanes include diphenyldimethoxysilane, phenyltrimethoxysilane, phenylethyldimethoxysilane and methylphenyldimethoxysilane. Preferred aliphatic silanes include isobutyltrimethoxysilane, diisobutyldimethoxysilane, diisopropyldimethoxysilane, di-t-butyldimethoxysilane, and t-butyltrimethoxysilane.

The above-described catalysts of this invention are useful in polymerization of alpha-olefins such as ethylene and propylene, and are most useful in stereospecific polymerization of alpha-olefins containing 3 or more carbon atoms such as propylene, butene-1, pentene-1, 4-methylpentene-1, and hexene-1, as well as mixtures thereof and mixtures thereof with ethylene. The invented catalysts are particularly effective in the stereospecific polymerization of propylene or mixtures thereof with up to 20 mole % ethylene or a higher alpha-olefin. Propylene homopolymerization is most preferred. According to the invention, highly crystalline polyalpha-olefins are prepared by contacting at least one alpha-olefin with the above-described catalyst compositions under polymerizing conditions. Such conditions include polymerization temperature and time, monomer pressure, avoidance of contamination of catalyst, choice of polymerization medium in slurry processes, the use of additives to control polymer molecular weights, and other conditions well known to persons of skill in the art. Slurry-, bulk-, and vapor-phase polymerization processes are contemplated herein.

The amount of catalyst to be employed varies depending on choice of polymerization technique, reactor size, monomer to be polymerized, and other factors known to persons of skill in the art, and can be determined on the basis of the examples appearing hereinafter. Typically, catalysts of this invention are used in amounts ranging from 0.2 to 0.02 milligrams of catalyst to gram of polymer produced.

Irrespective of the polymerization process employed, polymerization should be carried out at temperatures sufficiently high to ensure reasonable polymerization rates and avoid unduly long reactor residence times, but not so high as to result in the production of unreasonably high levels of stereorandom products due to excessively rapid polymerization rates. Generally, temperatures range from 0° to 120°C with 20° to 95°C being preferred from the standpoint of attaining good catalyst performance and high production rates. More preferably, polymerization according to this invention is carried out at temperatures ranging from 50° to 80°C.

Alpha-olefin polymerization according to this invention is carried out at monomer pressures of atmospheric or above. Generally, monomer pressures range from 20 to 600 psi (138-4136 kPa), although in vapor phase polymerizations, monomer pressures should not be below the vapor pressure at the polymerization temperature of the alpha-olefin to be polymerized.

The polymerization time will generally range from 1/2 to several hours in batch processes with corresponding average residence times in continuous processes. Polymerization times ranging from 1 to 4 hours are typical in autoclave-type reactions. In slurry processes, the polymerization time can be regulated as desired. Polymerization times ranging from 1/2 to several hours are generally sufficient in continuous slurry processes.

Diluents suitable for use in slurry polymerization processes include alkanes and cycloalkanes such as pentane, hexane, heptane, n-octane, isooctane, cyclohexane, and methylcyclohexane; alkylaromatics such as toluene, xylene, ethylbenzene, isopropylbenzene, ethyl toluene, n-propyl-benzene, diethylbenzenes, and mono- and dialkylnaphthalenes; halogenated and hydrogenated aromatics such as chlorobenzene, chloronaphthalene, ortho-dichlorobenzene, tetrahydronaphthalene, decahydronaphthalene; high molecular weight liquid paraffins or mixtures thereof, and other well-known diluents. It often is desirable to purify the polymerization medium prior to use, such as by distillation, percolation through molecular sieves, contacting with a compound such as an alkylaluminum compound capable of removing trace impurities, or by other suitable means.

Examples of gas-phase polymerization processes in which the catalyst of this invention is useful include both stirred bed reactors and fluidized bed reactor systems and are described in U.S. Patents 3,957,448; 3,965,083; 3,971,768; 3,970,611; 4,129,701; 4,101,289; 3,652,527; and 4,003,712. Typical gas phase olefin polymerization reactor systems comprise a reactor vessel to which olefin monomer and catalyst components can be added and which contain an agitated bed of forming polymer particles. Typically, catalyst components are added together or separately through one or more valve-controlled ports in the reactor vessel. Olefin monomer, typically, is provided to the reactor through a recycle gas system in which unreacted monomer removed as off-gas and fresh feed monomer are mixed and injected into the reactor vessel. A quench liquid which can be liquid monomer, can be added to polymerizing olefin through the recycle gas system in order to control temperature.

Irrespective of polymerization technique, polymerization is carried out under conditions that exclude oxygen, water, and other materials that act as catalyst poisons.

Also, according to this invention, polymerization can be carried out in the presence of additives to control polymer molecular weights. Hydrogen is typically employed for this purpose in a manner well known to persons of skill in the art.

Although not usually required, upon completion of polymerization, or when it is desired to terminate polymerization or deactivate the catalysts of this invention, the catalyst can be contacted with water, alcohols, acetone, or other suitable catalyst deactivators in a manner known to persons of skill in the art.

The products produced in accordance with the process of this invention are normally solid, predominantly isotactic polyalpha-olefins. Polymer yields are sufficiently high relative to the amount of catalyst employed so that useful products can be obtained without separation of catalyst residues. Further, levels of stereorandom by-products are sufficiently low so that useful products can be obtained without separation thereof. The polymeric products produced in the presence of the invented catalysts can be fabricated into useful articles by extrusion, injection molding, and other common techniques.

The invention described herein is illustrated, but not limited, by the following Examples and Comparative Runs, in which only Run A illustrates the invention.

### Example 1

### Step A - Formation of Magnesium Carbonate Solution

Into a one-liter reactor, equipped with a mechanical stirrer and flushed with dry nitrogen, was transferred a mixture of 150 grams of magnesium ethoxide, 275 milliliters of 2-ethyl-1-hexanol and 300 milliliters of toluene. This mixture was agitated at 450 rpm under 30 psig (207 kPa Gauge) of carbon dioxide and heated at 93°C for three hours. The resulting solution was transferred to a two-liter bottle and diluted with 400 milliliters of toluene and 400 milliliters of n-decane. The total volume of this solution was 1520 milliliters. The solution contained 0.10 gram-equivalents of magnesium ethoxide per milliliter.

### Step B - Formation of Solid Particles

Into a one-liter reactor was charged 100 milliliters of toluene, 30 milliliters of chlorobenzene, 9 of milliliters tetraethoxysilane, 8.5 of milliliters titanium tetrachloride and 100 milliliters of Isopar G (a C₁₀-average isoparaffinic hydrocarbon, b.p. 156-176°C) under a blanket of dry nitrogen. After the mixture was stirred at 600 rpm at 26°-30°C for five minutes, 50 milliliters of the Step A magnesium carbonate solution were added to the reactor through a syringe. Solid particles precipitated.

### Step C - Reprecipitation of Solid Particles

After the mixture containing the precipitate was stirred for five additional minutes, 22 of milliliters tetrahydrofuran (THF) were added rapidly through a syringe. Thereupon, the stirring was increased to 1500 rpm and the temperature rose to 60°C within 15 minutes. The first formed solid dissolved in the THF solution. Within about ten minutes after the THF addition, a solid began to reprecipitate from solution. Solid formation was complete within about five minutes. Stirring was continued for 45 minutes at 60°C after which agitation was stopped and the resulting solid was allowed to settle. Supernatant was decanted and the solid washed twice with 250-milliliter portions of toluene.

### Step D - Titanium(IV) Compound Treatment

To the solid from Step C in the one-liter reactor were added 200 of milliliters chlorobenzene and 100 of milliliters titanium tetrachloride. The resulting mixture was heated to 135°C within 30 minutes and stirred at 1500 rpm for one hour. After stirring was stopped, the resulting solid was allowed to settle and the supernatant was decanted. After 250 of milliliters chlorobenzene, 100 milliliters of titanium tetrachloride and 2.1 milliliters of di-n-butylphthalate were added to the resulting solid, the mixture was stirred at 600 rpm at 135°C for 90 minutes. Supernatant liquid was decanted and the residue washed three times with 200-milliliter portions of toluene and four times with 200-milliliter portions of Isopar G and twice with 200-milliliter portions of hexane. A total of 3.2 grams of solid was recovered. Analysis of this solid product showed 55.1 wt.% chlorine, 16.8 wt.% magnesium, 2.3 wt.% titanium and 7.3 wt.% di-n-butylphthalate.

### Example 2

Another catalyst component was prepared in a manner similar to that described in Example I, except that tetraethoxysilane was added after the magnesium carbonate solution reaction with titanium tetrachloride in Step B and the reprecipitation from THF was carried out under 20 psig (138 kPa Gauge) of carbon dioxide.

### Example 3

Another catalyst component was prepared in a manner similar to that described in Example 1, except that in Step B 300 milliliters of toluene, 60 milliliters of chlorobenzene, 18 milliliters of tetraethoxysilane, and 17.5 milliliters of titanium tetrachloride were used. The resulting solid particles were reprecipitated from 44 milliliters of THF. The reprecipitated solid particles were treated first with 200 milliliters of chlorobenzene and 4.2 milliliters of titanium tetrachloride and then with 300 milliliters of chlorobenzene, 100 milliliters of titanium tetrachloride and 4.2 milliliters of di-n-butylphthalate.

### Example 4

Another catalyst component was prepared in a manner similar to that described, except that in Step D the reprecipitated solid particles were treated once with 100 milliliters of chlorobenzene, 100 milliliters of titanium tetrachloride and 2 milliliters of di-n-butylphthalate.

### Example 5

Another catalyst component was prepared in a manner similar to that described in Example 1, except that in Step B 100 milliliters of toluene, 200 milliliters of chlorobenzene, 18 milliliters of trimethylethoxysilane, and 17.5 milliliters of titanium tetrachloride were used. In Step D, the reprecipitated solid particles were treated once with 200 milliliters of chlorobenzene, 200 milliliters of titanium tetrachloride and 5 milliliters of di-n-butylphthalate.

### Run A

Another catalyst component was prepared in a manner similar to that described in Example 1, except that in Step B no silane was used and in Step C the reprecipitated solid particles were treated once with 200 milliliters of chlorobenzene, 100 milliliters of titanium tetrachloride, and 2 milliliters of di-n-butylphthalate. The particle size distribution of the resulting catalyst component was random with a large portion of small and large particles.

### Run B

Another catalyst component was prepared in a manner similar to that described in Example 1, except that the particles of Step B were were separated by filtering and washed twice with hexane. Six grams of such dried particles were suspended in 200 milliliters of chlorobenzene, 100 milliliters titanium tetrachloride and 2.5 milliliters di-i-butylphthalate in a one-liter reactor and mixed for one hour at 800 rpm. After the agitation was stopped, supernatant was removed and 200 milliliters of titanium tetrachloride were added and stirring continued for one hour at 137°-143°C, followed by three toluene and three hexane washes.

### Example 6

Another catalyst component was prepared in a manner similar to that described in Example 1, except that in Step A 30 grams of magnesium ethoxide were charged to a 450-milliliter pressure bottle and toluene was added to the 300-milliliter mark. The resulting suspension was stirred overnight at ambient temperature under 30 psig (207 kPa Gauge) carbon dioxide. In Step B, 100 milliliters of toluene, 13 milliliters of trimethylethoxysilane, 8.75 milliliters titanium tetrachloride, 100 milliliters of Isopar G and 50 milliliters of the suspension of Step A were stirred at 600 rpm at ambient temperature. After about five minutes, 22 milliliters of THF were added and a clear solution was obtained. Within about 15 minutes the temperature increased to 66°C and a solid precipitated slowly after about ten minutes. The temperature was maintained at 66°C for 30 minutes.

### Example 7

Another catalyst component was prepared in a manner similar to that described in Example 1, except that 10 grams of magnesium ethoxide, 200 milliliters of chlorobenzene, 100 milliliters of toluene, 18 milliliters of tetraethoxysilane, 15 milliliters of 2-ethyl-1-hexanol, and 17.5 milliliters of titanium tetrachloride were charged to a one-liter reactor. The resulting suspension was reacted with 44 milliliters of THF under agitation at ambient temperature and a clear solution was obtained. The procedure of Example 1 then was followed.

### Run C

Another catalyst component was prepared in a manner similar to that described in Example 7, except that no 2-ethyl-1-hexanol was added. Although pulverized magnesium ethoxide was used, the solid did not dissolve as observed in the previous examples even with 50% more THF.

### Example 8

Another catalyst component was prepared in a manner similar to that described in Example 1, except that in Step B 170 milliliters of toluene, 35 milliliters of Isopar G, 20.5 milliliters of tetraethoxysilane, 19.4 milliliters of titanium tetrachloride, and 114 milliliters of the magnesium-containing solution were used. The resulting solid particles were reprecipitated from 50 milliliters of THF. The reprecipitated solid particles were treated first with 200 milliliters of toluene and 100 milliliters of titanium tetrachloride and then with 250 milliliters of toluene, 100 milliliters of titanium tetrachloride and 4.2 milliliters of di-n-butylphthalate. The resulting solid was washed three times with hot toluene, twice with hot Isopar G and twice with hot hexane. The resulting uniform spheroidal particles had an average particle size of 18 microns (18 »m).

### Example 9

Another catalyst component was prepared in a manner similar to that described in Example 8, except that a three-liter jacketed stainless steel autoclave equipped with baffles and a magnet-driven agitator was used. The reactants were 1190 milliliters of toluene, 350 milliliters of Isopar G, 144 milliliters of tetraethoxysilane, 136 milliliters of titanium tetrachloride, and 798 milliliters of the magnesium-containing solution were used. The resulting solid particles were reprecipitated from 350 milliliters of THF. The reprecipitated solid particles were treated first with 1400 milliliters of chlorobenzene and 700 milliliters of titanium tetrachloride and then with 1750 milliliters of chlorobenzene, 700 milliliters of titanium tetrachloride and 29.4 milliliters of di-n-butylphthalate. The resulting solid was washed with 500-milliliter portions of toluene, Isopar G, and hexane. A total of 75 grams of solid was recovered.

### Gas-Phase Polymerizations

A series of batch gas phase propylene polymerizations were performed using the titanium-containing components prepared in Examples 1-9 in a 2.5-liter reactor at 71°C at 300 psig including 36 mmole of hydrogen with stirring at 40 rpm with a reaction time of 2 hours. Triethylaluminum (TEA) was used as a cocatalyst together with diphenyldimethoxysilane (DPDMSi) as a modifier. The reactor was charged with TEA/modifier, titanium component, hydrogen, and propylene in that order. Results are shown in Table I.

"Yield" (grams of polymer produced per gram of solid catalyst component) was determined by magnesium analysis of the polymer product and in some cases based on the weight of solid catalyst used to polymer produced. "Extractables" were determined by measuring the loss in weight of a dry sample of ground polymer after being extracted in boiling n-hexane for four to six hours.

**Table I**

| Gas-phase Polymerization Performance | | | | | |
|---|---|---|---|---|---|
| Example (Run) | Cocatalyst System¹ | Yield (g/g) | Extractables (wt.%) | Bulk Density (lbs/ft³) [kg/m³] | Melt Flow Rate (g/10 min.) |
| 1 | a | 24,000 | 1.2 | 29.0 (465) | 1.7 |
| 2 | b | 24,700 | 1.2 | 29.7 (477) | 1.4 |
| 3 | b | 28,900 | 1.0 | 29.4 (472) | 2.3 |
| 4 | a | 10,100 | 3.5 | 28.2 (453) | 3.4 |
| 5 | a | 13,500 | 1.6 | 29.7 (477) | 2.2 |
| (A) | a | 10,100 | 2.0 | 27.2 (437) | 1.6 |
| (B) | c | 8,200 | 1.4 | 26.0 (417) | 2.1 |
| 6 | c | 14,000 | 2.4 | 29.0 (465) | 1.5 |
| 7 | b | 21,300 | 1.5 | 27.8 (446) | 2.7 |
| 8 | a | 23,500 | 1.0 | 29.0 (465) | 2.8 |
| 9 | a | 22,600 | 1.1 | 29.0 (465) | 3.5 |

| | | | | | |
|---|---|---|---|---|---|
| ¹Cocatalyst Systems TEA/DPDMSi/Ti Molar Ratios: a = 100/8/1 b = 200/20/1 c = 100/10/1 | | | | | |

**Table II**

| Polymer Particle Size Distribution | |
|---|---|
| Size (»m) (microns) | Percent of Total weight (Example 1) |
| >850 | 3.8 |
| 600-850 | 27.5 |
| 425-600 | 56.2 |
| 150-425 | 12.3 |
| <150 | 0.2 |

## Claims

1. A solid, hydrocarbon-insoluble alpha-olefin polymerization catalyst component which comprises a product formed by:
A. Forming a solution of a magnesium-containing species from
(i) a magnesium carbonate or a magnesium carboxylate, or
(ii) from a magnesium-containing species formed from a magnesium alkoxide and sulfur dioxide;
B. Precipitating solid particles from such magnesium-containing solution by treatment with a transition metal halide in the absence of an organosilane;
C. Reprecipitating such solid particles from a mixture containing a cyclic ether, cyclohexene oxide, cyclohexanone, ethyl acetate or phenyl acetate ; and
D. Treating the reprecipitated particles with a transition metal compound and an electron donor.

2. The catalyst component of Claim 1 wherein the magnesium carbonate solution is formed from a magnesium alkoxide and carbon dioxide.

3. The catalyst component of Claim 1 or Claim 2 wherein a magnesium alkoxide is solubilized with an alcohol.

4. The catalyst component of any preceding claim wherein the transition metal halide in Step B is a titanium(IV) halide.

5. The catalyst component of any preceding claim wherein the transition metal halide in Step B is a titanium tetrachloride.

6. The catalyst component of any preceding claim wherein the transition metal compound in Step D is a titanium(IV) compound.

7. A solid, hydrocarbon-insoluble alpha-olefin polymerization catalyst component according to Claim 1 which comprises a product formed by:
A. Forming a solution in an alcohol medium of a magnesium-containing species formed from a magnesium alkoxide and carbon dioxide.
B. Precipitating solid particles from such magnesium-containing solution by treatment with a titanium halide in the absence of an organosilane;
C. Reprecipitating such solid particles from a mixture containing a cyclic ether; and
D. Treating the reprecipitated particles with a Ti(IV) compound and then with a mixture of a Ti(IV) compound and an electron donor.

8. The catalyst component of Claim 7 wherein in Step A the magnesium alkoxide is magnesium ethoxide.

9. The catalyst component of Claim 7 or Claim 8 wherein the titanium halide in Step B is a titanium tetrachloride.

10. The catalyst component of any preceding claim wherein the transition metal compound in Step D is a titanium tetrachloride.

11. The catalyst component of any preceding claim wherein the cyclic ether is tetrahydrofuran, tetrahydropyran or 2-methyltetrahydrofuran.

12. The catalyst component of Claim 10 wherein the cyclic ether in Step C is tetrahydrofuran.

13. The catalyst component of any of Claims 1 to 10 wherein the cyclic ether in Step C is a thioether.

14. The catalyst component of any of Claims 1 to 10 wherein the cyclic ether in Step C is tetrahydrothiophene, 2,2,5,5-tetrahydrofuran or tetrahydropyran-2-methanol.

15. The catalyst component of any preceding claim wherein cyclohexene oxide, cyclohexanone, ethyl acetate or phenyl acetate is used as a reprecipitation medium in Step C.

16. The catalyst component of any preceding claim wherein the particles from Step C are first treated with titanium tetrachloride and then with titanium tetrachloride in the presence of an electron donor.

17. The catalyst component of any preceding claim wherein in Step A said solution is formed in 2-ethyl-1-hexanol and the electron donor in Step D is di-n-butylphthalate, diisobutylphthalate or mixtures thereof.

18. The catalyst component of Claim 17 wherein the electron donor in Step D is di-n-butylphthalate.

19. The catalyst component of any preceding claim wherein the electron donor is a dialkylphthalate ester.

20. The catalyst component of Claim 19 wherein the electron donor is diisobutylphthalate, diethylphthalate, or di-n-butylphthalate.

21. An alpha-olefin polymerization catalyst comprising the solid component of any preceding claim, an alkylaluminum compound, and an organosilane.

## Patentansprüche

1. Feste, Kohlenwasserstoff-unlösliche α-olefin-Polymerisationskatalysator-Komponente, die ein Produkt umfaßt, das gebildet wird durch:
A. Bildung einer Lösung eines Magnesium-enthaltenden Stoffs ("species") aus
i) einem Magnesiumcarbonat oder einem Magnesiumcarboxylat oder
ii) einem Magnesium-enthaltenden Stoff, gebildet aus einem Magnesiumalkoxid und Schwefeldioxid;
B. Ausfällung fester Teilchen aus einer solchen Magnesium-enthaltenden Lösung durch Behandlung mit einem Übergangsmetallhalogenid in Abwesenheit eines Organosilans;
C. nochmaliges Ausfällen solcher festen Teilchen aus einer Mischung, die einen zyklischen Ether, Cyclohexanoxid, Cyclohexanon, Ethylacetat oder Phenylacetat enthält; und
D. Behandlung der ausgefällten Teilchen mit einer Verbindung eines Übergangsmetalls und einem Elektronendonator.

2. Katalysator-Komponente nach Anspruch 1, worin die Magnesiumcarbonat-Lösung aus einem Magnesiumalkoxid und Kohlendioxid gebildet wird.

3. Katalysator-Komponente nach Anspruch 1 oder 2, worin ein Magnesiumalkoxid mit einem Alkohol löslich gemacht wird.

4. Katalysator-Komponente nach einem der vorhergehenden Ansprüche, worin das Übergangsmetallhalogenid in Schritt B ein Titan-(IV)-halogenid ist.

5. Katalysator-Komponente nach einem der vorhergehenden Ansprüche, worin das Übergangsmetallhalogenid in Schritt B ein Titantetrachlorid ist.

6. Katalysator-Komponente nach einem der vorhergehenden Ansprüche, worin die Übergangsmetallverbindung in Schritt D eine Titan-(IV)-Verbindung ist.

7. Feste, Kohlenwasserstoff-unlösliche α-Olefin-Polymerisationskatalysator-Komponente nach Anspruch 1, die ein Produkt umfaßt, das gebildet wird durch:
A. Bildung einer Lösung in einem Alkoholmedium eines Magnesium-enthaltenden Stoffs, gebildet aus einem Magnesiumalkoxid und Kohlendioxid.
B. Ausfällen fester Teilchen aus einer solchen Magnesium-enthaltenden Lösung durch Behandlung mit einem Titanhalogenid in Abwesenheit eines Organosilans;
C. nochmaliges Ausfällen solcher fester Teilchen aus einer Mischung, die einen zyklischen Ether enthält und
D. Behandlung der abermals ausgefällten Teilchen mit einer Ti-(IV)-Verbindung und einem Elektronendonator.

8. Katalysator-Komponente nach Anspruch 7, worin in Schritt A das Magnesiumalkoxid Magnesiumethoxid ist.

9. Katalysator-Komponente nach Anspruch 7 oder 8, worin das Titanhalogenid in Schritt B Titantetrachlorid ist.

10. Katalysatorkomponente nach einem der vorhergehenden Ansprüche, worin die Übergangsmetall-Verbindung in Schritt D Titantetrachlorid ist.

11. Katalysatorkomponente nach einem der vorhergehenden Ansprüche, worin der zyklische Ether Tetrahydrofuran, Tetrahydropyran oder 2-Methyltetrahydrofuran ist.

12. Katalysator-Komponente nach Anspruch 10, worin der zyklische Ether in Schritt C Tetrahydrofuran ist.

13. Katalysator-Komponente nach einem der Ansprüche 1 bis 10, worin der zyklische Ether in Schritt C ein Thioether ist.

14. Katalysator-Komponente nach einem der Ansprüche 1 bis 10, worin der zyklische Ether in Schritt C Tetrahydrothiophen, 2,2,5,5-Tetrahydrofuran oder Tetrahydropyran-2-methanol ist.

15. Katalysator-Komponente nach einem der vorhergehenden Ansprüche, wobei als ein Medium zur nochmaligen Ausfällung in Schritt C Cyclohexenoxid, Cyclohexanon, Ethylacetat oder Phenylacetat verwendet wird.

16. Katalysator-Komponente nach einem der vorhergehenden Ansprüche, wobei die Teilchen aus Schritt C zuerst mit Titantetrachlorid und dann mit Titantetrachlorid in Anwesenheit eines Elektronendonators behandelt werden.

17. Katalysator-Komponente nach einem der vorhergehenden Ansprüche, wobei in Schritt A die genannte Lösung in 2-Ethylhexanol gebildet wird und der Elektronendonator in Schritt D Di-n-butylphthalat, Diisobutylphthalat oder Mischungen von diesen ist.

18. Katalysator-Komponente nach Anspruch 17, worin der Elektronendonator in Schritt D Di-n-butylphthalat ist.

19. Katalysator-Komponente nach einem der vorhergehenden Ansprüche, worin der Elektronendonator ein Dialkylphthtalatester ist.

20. Katalysator-Komponente nach Anspruch 19, worin der Elektronendonator Diisobutylphthalat, Diethylphthalat oder Di-n-butylphthalat ist.

21. α-olefin-Polymerisations-Katalysator, der die feste Komponente nach einem der vorhergehenden Ansprüche, eine Alkylaluminiumverbindung und ein Organosilan umfaßt.

## Revendications

1. Composant catalyseur de polymérisation d'alpha-oléfines solide, insoluble dans les hydrocarbures, qui comprend un produit formé par :
A. la formation d'une solution d'une espèce contenant du magnésium à partir de
(i) un carbonate de magnésium ou un carboxylate de magnésium, ou
(ii) une espèce contenant du magnésium formée à partir d'un alcoxyde de magnésium et de dioxyde de soufre ;
B. la précipitation de particules solides à partir d'une telle solution contenant du magnésium par traitement avec un halogénure de métal de transition en l'absence d'un organosilane ;
C. la reprécipitation de telles particules solides à partir d'un mélange contenant un éther cyclique, de l'oxyde de cyclohexène, de la cyclohexanone, de l'acétate d'éthyle ou de l'acétate de phényle ; et
D. le traitement des particules reprécipitées avec un composé de métal de transition et un donneur d'électrons.

2. Composant catalyseur de la revendication 1 dans lequel la solution de carbonate de magnésium est formée à partir d'un alcoxyde de magnésium et de dioxyde de carbone.

3. Composant catalyseur de la revendication 1 ou de la revendication 2 dans lequel un alcoxyde de magnésium est solubilisé avec un alcool.

4. Composant catalyseur de l'une quelconque des revendications précédentes dans lequel l'halogénure de métal de transition dans l'étape B est un halogénure de titane (IV).

5. Composant catalyseur de l'une quelconque des revendications précédentes dans lequel l'halogénure de métal de transition dans l'étape B est un tétrachlorure de titane.

6. Composant catalyseur de l'une quelconque des revendications précédentes dans lequel le composé de métal de transition dans l'étape D est un composé de titane (IV).

7. Composant catalyseur de polymérisation d'alpha-oléfines solide, insoluble dans les hydrocarbures, selon la revendication 1 qui comprend un produit formé en:
A. formant une solution dans un milieu alcool d'une espèce contenant du magnésium formée à partir d'un alcoxyde de magnésium et de dioxyde de carbone ;
B. précipitant des particules solides à partir d'une telle solution contenant du magnésium par traitement avec un halogénure de titane en l'absence d'un organosilane ;
C. reprécipitant de telles particules solides à partir d'un mélange contenant un éther cyclique ; et
D. traitant les particules reprécipitées avec un composé de Ti (IV) puis avec un mélange d'un composé de Ti (IV) et d'un donneur d'électrons.

8. Composant catalyseur de la revendication 7 dans lequel dans l'étape A l'alcoxyde de magnésium est l'éthoxyde de magnésium.

9. Composant catalyseur de la revendication 7 ou de la revendication 8 dans lequel l'halogénure de titane dans l'étape B est un tétrachlorure de titane.

10. Composant catalyseur de l'une quelconque des revendications précédentes dans lequel le composé de métal de transition dans l'étape D est un tétrachlorure de titane.

11. Composant catalyseur de l'une quelconque des revendications précédentes dans lequel l'éther cyclique est le tétrahydrofuranne, le tétrahydropyranne ou le 2-méthyl-tétrahydrofuranne.

12. Composant catalyseur de la revendication 10 dans lequel l'éther cyclique dans l'étape C est le tétrahydrofuranne.

13. Composant catalyseur de l'une quelconque des revendications 1 à 10 dans lequel l'éther cyclique de l'étape C est un thioéther.

14. Composant catalyseur de l'une quelconque des revendication 1 à 10 dans lequel l'éther cyclique dans l'étape C est le tétrahydrothiophène, le 2,2,5,5-tétrahydrofuranne ou le tétrahydropyranne-2-méthanol.

15. Composant catalyseur de l'une quelconque des revendications précédentes dans lequel on utilise l'oxyde de cyclohexène, la cyclohexanone, l'acétate d'éthyle ou l'acétate de phényle comme milieu de reprécipitation dans l'étape C.

16. Composant catalyseur de l'une quelconque des revendications précédentes dans lequel on commence par traiter les particules de l'étape C ave du tétrachlorure de titane puis avec du tétrachlorure de titane en présence d'un donneur d'électrons.

17. Composant catalyseur de l'une quelconque des revendications précédentes dans lequel dans l'étape A ladite solution est formée dans le 2-éthyl-1-hexanol et le donneur d'électrons dans l'étape D est le phtalate de di-n-butyle, le phtalate de diisobutyle ou leurs mélanges.

18. Composant catalyseur de la revendication 17 dans lequel le donneur d'électrons dans l'étape D est le phtalate de di-n-butyle.

19. Composant catalyseur de l'une quelconque des revendications précédentes dans lequel le donneur d'électrons est un ester de phtalate de dialkyle.

20. Composant catalyseur de la revendication 19 dans lequel le donneur d'électrons est le phtalate de diisobutyle, le phtalate de diéthyle ou le phtalate de di-n-butyle.

21. Catalyseur de polymérisation d'alpha-oléfines comprenant le composant solide de l'une quelconque des revendications précédentes, un composé d'alkylaluminium et un organosilane.
